# EUROPÄISCHE PATENTSCHRIFT

(11) **EP 1 736 269 B1**
(45) Veröffentlichungstag und Bekanntmachung des Hinweises auf die Patenterteilung: **30.07.2008**
(21) Anmeldenummer: 05022154.8
(22) Anmeldetag: 11.10.2005
(51) Int. Cl.: B23K 1/08, B23K 3/06, B23K 3/08, B23K 1/00

(54) **Wellenlötmaschine mit quer zu einer Werkstückförderbahn bewegbaren auswechselbarem Lotbad : Verfahren zum Wellenlöten von Bauteilen mit Wechsel der Lotreservoir**
Wave soldering device with exchangeable soldering baths, the latter being moveable in a perpendicular direction relative to the conveyor providing the workpieces ; Process of wave soldering of workpieces with exchange of soldering baths
Dispositif de soudage à la vague avec des bains de soudure échangeables et déplaçables dans une direction perpendiculaire au convoyeur des pièces à traiter ; Méthode de soudage à la vague avec échange de réservoirs

(30) Priorität: 21.06.2005 DE 102005028683
(43) Veröffentlichungstag der Anmeldung: 27.12.2006
(73) Patentinhaber: Linde Aktiengesellschaft, 80807 München (DE); epm Handels AG, 8954 Geroldswil (CH)
(72) Erfinder: Isler, Hans, 8967 Widen (CH); Wandke, Ernst, Dr., 82538 Geretsried (DE)
(74) Vertreter: Kasseckert, Rainer

(56) Entgegenhaltungen:
- EP-A- 0 311 393
- US-A- 4 921 156
- US-A- 5 090 651
- PATENT ABSTRACTS OF JAPAN Bd. 1995, Nr. 07, 31. August 1995 (1995-08-31) -& JP 07 109555 A (SUMITOMO METAL IND LTD), 25. April 1995 (1995-04-25)
- PATENT ABSTRACTS OF JAPAN Bd. 013, Nr. 408 (C-634), 8. September 1989 (1989-09-08) -& JP 01 147048 A (HITACHI LTD), 8. Juni 1989 (1989-06-08)
- PATENT ABSTRACTS OF JAPAN Bd. 013, Nr. 457 (C-644), 16. Oktober 1989 (1989-10-16) -& JP 01 177344 A (KAWASAKI STEEL CORP), 13. Juli 1989 (1989-07-13)
- PATENT ABSTRACTS OF JAPAN Bd. 017, Nr. 350 (M-1438), 2. Juli 1993 (1993-07-02) -& JP 05 050228 A (SENJU METAL IND CO LTD), 2. März 1993 (1993-03-02)

## Beschreibung

Die Erfindung betrifft eine Vorrichtung zum Wellenlöten von Bauteilen mit einem ersten und mit einem zweiten Lotreservoir, mit einer Lötwelle und mit Mitteln zum Fördern der Bauteile entlang einer Förderbahn.

Ferner bezieht sich die Erfindung auf ein Verfahren zum Wellenlöten von Bauteilen, wobei die Bauteile entlang einer Förderbahn bewegt und mit einer Lötwelle in Kontakt gebracht werden, die über einem ersten Lotreservoir erzeugt wird, welches sich in Lötposition befindet, und wobei ein zweites Lotreservoir vorgesehen ist.

Das Löten von Massengütern, beispielsweise von bestückten Leiterplatten, erfolgt vielfach in Lötanlagen, die auf dem Wellenlötprinzip beruhen. Bei diesem Verfahren werden die zu lötenden Leiterplatten mittels einer Fördereinrichtung entlang einer definierten Bahn über ein Lotreservoir, auch als Lottiegel bezeichnet, geführt. Über dem Lotreservoir werden eine oder mehrere Lotwellen erzeugt, die die Leiterplatten mit Lot benetzen (siehe z.B. US-A-4 921 156).

Neuere gesetzliche Regelungen, wie beispielsweise die europäische Richtlinie zur Beschränkung der Verwendung bestimmter gefährlicher Stoffe in Elektro- und Elektronikgeräten (RoHS), zwingen die Industrie langfristig auf bleifreie Lote umzusteigen. Während einer Übergangsfrist und angesichts der vielen, gesetzlich zugelassenen Ausnahmen wird es aber für die Lötindustrie notwendig sein, sowohl mit bleihaltigen als auch mit bleifreien Loten zu arbeiten. Dies bedeutet, dass die Bleisorte, und damit das Lotreservoir, innerhalb kürzester Zeit gewechselt werden müssen.

Aus dem Stand der Technik sind zu dieser Problematik bisher folgende Lösungen bekannt:

Zum einen wird ein zweites Lötreservoir außerhalb des ersten in der Lötmaschine befindlichen Lotreservoirs vorgesehen. Nachteilig an dieser Lösung ist, dass der Wechsel des Lotreservoirs mehrere Stunden in Anspruch nimmt, denn aus Arbeitsschutzgründen, im Interesse der Handhabung und um Verunreinigungen des Lotbades zu vermeiden, ist das erste im Einsatz befindliche Lotreservoir zunächst soweit abzukühlen, dass das Lot nicht mehr flüssig ist. Das heißt, das Lot muss auf eine Temperatur von etwa 5 ° unter Solidus abgekühlt werden. Der Zeitbedarf hierfür liegt bei etwa 2 Stunden. Aus den gleichen Gründen kann das nun in Funktion zu bringende zweite Lotreservoir außerhalb der Maschine ebenfalls nur auf eine Temperatur von etwa 5 ° unter Solidus vorgeheizt werden. Erst nach dem Einbringen des zweiten Lotreservoirs in die Maschine kann dieses auf Betriebstemperatur gebracht werden, was ebenfalls etwa 2 Stunden erfordert.

Bei der anderen bekannten Lösung werden in der Maschine zwei unabhängig von einander arbeitende Lotreservoire in Transportrichtung der zu lötenden Bauteile hintereinander gebaut und ständig im betriebsbereiten Zustand gehalten. Damit ist praktisch ein sehr schneller Wechsel der Lotart, das heißt zwischen den beiden Lotreservoiren, ohne Produktionsunterbrechung möglich. Diesem Vorteil stehen jedoch einige entscheidende Nachteile entgegen. So ist aufgrund des zweiten Lotreservoirs eine Verlängerung der Lötmaschine um 1 bis 2 m erforderlich. Außerdem ändern sich infolge der geometrischen Veränderung und der damit verbundenen Veränderung der Temperaturkurve die Prozessparameter von Lotreservoir zu Lotreservoir wesentlich, die auch durch Nachregelung nicht kompensiert werden können.

Aufgabe vorliegender Erfindung ist es daher, eine Vorrichtung und ein Verfahren zum Wellenlöten aufzuzeigen, welche einen schnellen Wechsel von einem Lotreservoir auf ein anderes Lotreservoir erlauben.

Die Erfindung wird durch eine Vorrichtung gemäß Anspruch 1 definiert.

Das erfindungsgemäße Verfahren zum Wellenlöten von Bauteilen ist im Anspruch 6 definiert.

Die erfindungsgemäße Vorrichtung weist zwei abwechselnd betreibbare Lotreservoire auf. Die beiden Lotreservoire sind so angeordnet, dass diese quer zur Förderbahn der zu lötenden Bauteile beweglich sind und auf einfache Weise in Lötposition, das heißt an die entsprechende Stelle unterhalb der Förderbahn, bewegt oder aus dieser entfernt werden können. Die gesamte Lötanlage erfährt in ihrer Längsausdehnung keine Änderung im Vergleich zu einer Lötanlage mit nur einem Lotreservoir.

Von den beiden Lotreservoiren ist immer höchstens eines in Betrieb und befindet sich dann an einer bestimmten Lötposition unterhalb der Förderbahn der Bauteile. Soll das zweite Lotreservoir in Betrieb genommen werden, so wird dieses an die Lötposition gebracht, die vorher von dem ersten Lotreservoir eingenommen wurde. Das heißt, während ihrer jeweiligen aktiven Zeit befinden sich die Lotreservoire an derselben Stelle, so dass die Prozessparameter von dem Wechsel der Lotreservoire unbeeinflusst bleiben.

Erfindungsgemäß ist eine Transportvorrichtung vorgesehen, um das erste und das zweite Lotreservoir rechtwinklig zu der Förderbahn zu bewegen. Beispielsweise können Laufschienen vorgesehen sein, die sich links und rechts rechtwinklig zur Förderbahn erstrecken und auf denen die Lotreservoire senkrecht zur Förderbahn bewegt werden können. Die Transportvorrichtung ermöglicht ein einfaches Hinein- und Herausschieben der Lotreservoire in beziehungsweise aus dem Bereich der Förderbahn, welches im Hinblick auf die Arbeitssicherheit und die Handhabung deutliche Vorteile bringt.

Zur Vermeidung von Verunreinigungen der Lotreservoire ist es günstig, das erste und /oder das zweite Lotreservoir und / oder die Lötwelle von der Umgebungsatmosphäre abzuschirmen. Besonders bevorzugt sind Mittel zum Abschirmen von Umgebungsatmosphäre von dem ersten und dem zweiten Lotreservoir vorgesehen. Die Abschirmungen verhindern mögliche Verunreinigungen des Lotes auch in der Zeit, in der ein Lotreservoir inaktiv ist. Es ist möglich, das inaktive Lotreservoir rechtzeitig vor dem geplanten Lotreservoirwechsel auf Betriebstemperatur zu bringen, so dass zum Wechsel des Lotreservoirs lediglich das bisher aktive Lotreservoir von der Lötposition wegbewegt und das bisher inaktive Lotreservoir in diese Lötposition hineinbewegt werden muss. Der Lotreservoirwechsel ist damit in kürzester Zeit zu bewerkstelligen.

Es hat sich weiter als vorteilhaft erweisen, entsprechende Mittel zum Abschirmen der über dem ersten Lotreservoir vorliegenden Atmosphäre von der über dem zweiten Lotreservoir vorliegenden Atmosphäre vorzusehen. Dies kann beispielsweise durch Trennschieber erfolgen, die den Raum, in dem sich das aktive Lotreservoir befindet, von dem Raum, in den das inaktive Lotreservoir gebracht wurde, gasdicht abkoppeln. Auf diese Weise können an dem inaktiven Lotreservoir Reinigungs- und Wartungsarbeiten durchgeführt werden, ohne dass der Betrieb der Lötanlage unterbrochen werden muss.

Vorzugsweise sind das erste und das zweite Lotreservoir jeweils mit einem eigenen Lötdüsensystem versehen, so dass beide Lotreservoire jeweils über die komplette Ausstattung verfügen, um eine Lotwelle zu erzeugen. Das Lötdüsensystem umfasst zumindest eine Lötdüse mit Düsenstock sowie eine Pumpe mit Antrieb. Entsprechend wird bei einem Wechsel des Lotreservoirs das Lötdüsensystem mitgewechselt. Auf diese Weise wird verhindert, dass, beispielsweise über Rückstände in der Lötdüse, das Lot im zweiten Lotreservoir durch Lot aus dem ersten Lotreservoir verunreinigt wird.

Die Erfindung hat insbesondere in der zukünftigen Phase, in der auf bleifreie Lote umgestellt werden muss, große Bedeutung. Während der Übergangszeit wird es notwendig sein, zeitweise mit bleihaltigen Loten und zeitweise mit bleifreien Loten zu arbeiten. Die Erfindung ermöglicht dabei einen sehr schnellen Lotwechsel. Nach Abschluss der Übergangszeit, wenn nur noch mit bleifreien Loten gelötet werden darf, erlaubt die erfindungsgemäße Ausgestaltung einen einfachen und schnellen Umbau der Anlage in eine herkömmliche, vollwertige Lötanlage mit nur einem Lotreservoir.

Die Erfindung sowie weitere Einzelheiten der Erfindung werden im Folgenden anhand von einem in den Zeichnungen dargestellten Ausführungsbeispiel näher erläutert. Hierbei zeigen:

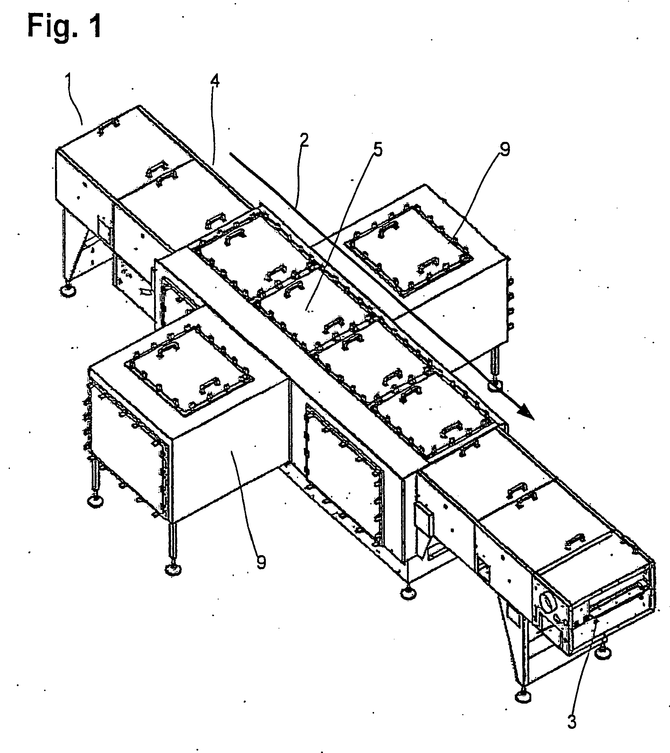

- Figur 1: eine erfindungsgemäße Wellenlötanlage mit Einhausung und

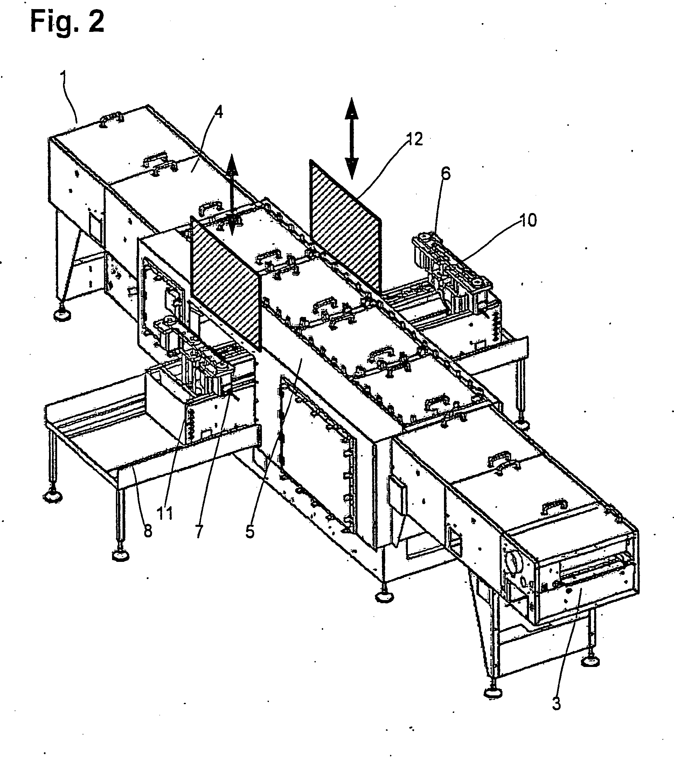

- Figur 2: dieselbe Anlage, bei der ein Teil der Einhausung abgenommen ist.

In den Figuren ist eine erfindungsgemäße Wellenlötanlage dargestellt. Die zu lötenden Bauteile, beispielsweise bestückte Leiterplatten, werden am Eintrittsende 1 in die Lötanlage eingebracht, durchlaufen die Lötanlage in Förderrichtung 2 und verlassen die Anlage fertig gelötet am Austrittsende 3. Die gesamte Lötanlage ist mit ei ner Einhausung 4 versehen, so dass im Inneren der Lötanlage eine definierte Atmosphäre hergestellt und aufrechterhalten werden kann.

Der eigentliche Lötvorgang findet im Maschinenraum 5 der Lötanlage statt, durch den die zu lötenden Bauteile mittels einer Fördereinrichtung transportiert werden.

Die gezeigte Lötanlage erlaubt das Löten mit zwei verschiedenen Lotarten, die sich in den beiden Lottiegeln oder Lotreservoiren 6, 7 befinden. Die beiden Lottiegel 6, 7 sind auf einer Transportvorrichtung 8 angeordnet, die es ermöglicht, die Lottiegel 6, 7 rechtwinklig zur Förderrichtung 2 und damit rechtwinklig zur Längsausdehnung der Lötanlage zu verschieben.

Jeder der beiden Lottiegel 6, 7 ist mit einem kompletten Lötdüsensystem 10, 11 versehen. Jedes Lötdüsensystem 10, 11 umfasst eine Lötdüse mit Düsenstock und Propellerpumpe mit Antrieb, um das Lot zu der Lötdüse zu fördern.

Mit Hilfe der Transportvorrichtung 8 kann jeweils einer der beiden Lottiegel 6, 7 in die Lötposition in den Maschinenraum 5 der Lötanlage, das heißt in den Bereich unterhalb der Förderbahn der zu lötenden Bauteile, bewegt werden. Der inaktive Lottiegel 6, welcher sich außerhalb des Maschinenraums 5 befindet, ist ebenfalls von einer Einhausung 9 umgeben. Die Einhausung 9 verhindert den Zutritt von Umgebungsatmosphäre zu dem inaktiven Lottiegel 6.

Der Raum, in dem sich der inaktive Lottiegel befindet, und der Maschinenraum 5 können über Trennschieber 12 gasdicht voneinander abgekoppelt werden. Damit können parallel zum Lötbetrieb Reinigungs- und Wartungsarbeiten an dem inaktiven Lottiegel vorgenommen werden.

## Patentansprüche

1. Vorrichtung zum Wellenlöten von Bauteilen mit einem ersten und mit einem zweiten Lotreservoir (6, 7), mit einer Lötwelle und mit Mitteln zum Fördern der Bauteile entlang einer Förderbahn (2), wobei das erste oder das zweite Lotreservoir quer zur Förderbahn (2) bewegbar angeordnet sind und wobei sich im Betrieb der Vorrichtung das erste oder das zweite Lotreservoir in einer Lötposition befinden, wobei eine Transportvorrichtung (8) vorgesehen ist, um das erste und das zweite Lotreservoir (6, 7) rechtwinklig zu der Förderbahn (2) in die Lötposition hinein und aus der Lötposition heraus zu bewegen.

2. Vorrichtung nach Anspruch 1, **dadurch gekennzeichnet, dass** Mittel (4, 9) zum Abschirmen von Umgebungsatmosphäre von dem ersten und / oder dem zweiten Lotreservoir (6, 7) und / oder der Lötwelle vorgesehen sind.

3. Vorrichtung nach einem der Ansprüche 1 oder 2, **dadurch gekennzeichnet, dass** Mittel (4, 9, 12) zum Abschirmen der über dem ersten Lotreservoir (6) vorliegenden Atmosphäre von der über dem zweiten Lotreservoir (7) vorliegenden Atmosphäre vorgesehen sind.

4. Vorrichtung nach einem der Ansprüche 1 bis 3, **dadurch gekennzeichnet, dass** eine die Förderbahn (2) zumindest teilweise umgebende Einhausung (4) vorgesehen ist.

5. Vorrichtung nach einem der Ansprüche 1 bis 4, **dadurch gekennzeichnet, dass** das erste und das zweite Lotreservoir (6, 7) jeweils mit einem eigenen Lötdüsensystem (10, 11) versehen sind.

6. Verfahren zum Wellenlöten von Bauteilen, wobei die Bauteile entlang einer Förderbahn (2) bewegt und mit einer Lötwelle in Kontakt gebracht werden, die über einem ersten Lotreservoir (6) erzeugt wird, welches sich in Lötposition befindet, und wobei ein zweites Lotreservoir (7) vorgesehen ist, wobei bei einem Wechsel von dem ersten (6) auf das zweite Lotreservoir (7) das erste Lotreservoir (6) quer zur Förderbahn (2) aus der Lötposition herausbewegt und das zweite Lotreservoir (7) quer zur Förderbahn (2) in die Lötposition hineinbewegt werden.

## Claims

1. Device for wave soldering components, with a first and a second solder reservoir (6, 7), with a solder wave and with means for feeding the components along a feed path (2), the first or second solder reservoir being arranged such that it is movable transversely in relation to the feed path (2) and the first or the second solder reservoir being in a soldering position during the operation of the device, wherein a transporting device (8) is provided to move the first and second solder reservoirs (6, 7) at right angles to the feed path (2) into the soldering position and out of the soldering position.

2. Device according to Claim 1, **characterized in that** means (4, 9) for shielding the first and/or second solder reservoir (6, 7) and/or the solder wave from ambient atmosphere are provided.

3. Device according to either of Claims 1 and 2, **characterized in that** means (4, 9, 12) for shielding the atmosphere that is above the first solder reservoir (6) from the atmosphere that is above the second solder reservoir (7) are provided.

4. Device according to one of Claims 1 to 3, **characterized in that** an enclosure (4) that at least partially surrounds the feed path (2) is provided.

5. Device according to one of Claims 1 to 4, **characterized in that** the first and second solder reservoirs (6, 7) are respectively provided with a solder nozzle system (10, 11) of their own.

6. Method for wave soldering components, the components being moved along a feed path (2) and brought into contact with a solder wave, which is produced over a first solder reservoir (6) that is in the soldering position, and a second solder reservoir (7) being provided, wherein, when the first solder reservoir (6) is exchanged for the second solder reservoir (7), the first solder reservoir (6) is moved transversely in relation to the feed path (2) out of the soldering position and the second solder reservoir (7) is moved transversely in relation to the feed path (2) into the soldering position.

## Revendications

1. Dispositif de brasage à la nappe de composants, lequel dispositif présente un premier et un deuxième réservoir (6, 7) à brasure, une nappe de brasage et des moyens de transport des composants sur une bande transporteuse (2), le premier ou le deuxième réservoir à brasure pouvant être déplacés transversalement par rapport à la bande transporteuse (2) et, lorsque le dispositif fonctionne, le premier ou le deuxième réservoir à brasure sont situés dans une position de brasage, un dispositif de transport (8) étant prévu pour déplacer le premier et le deuxième réservoir (6, 7) à brasure perpendiculairement à la bande transporteuse (2) jusque dans la position de brasage et hors de la position de brasage.

2. Dispositif selon la revendication 1, **caractérisé en ce qu'**il présente des moyens (4, 9) de protection de l'atmosphère ambiante vis-à-vis du premier et/ou du deuxième réservoir (6, 7) à brasure et/ou de la nappe de brasage.

3. Dispositif selon l'une des revendications 1 ou 2, **caractérisé en ce qu'**il présente des moyens (4, 9, 12) qui protègent l'atmosphère située au-dessus du premier réservoir (6) à brasure de l'atmosphère située au-dessus du deuxième réservoir (7) à brasure.

4. Dispositif selon l'une des revendications 1 à 3, **caractérisé en ce qu'**il présente une enceinte (4) qui entoure au moins en partie la bande transporteuse (2).

5. Dispositif selon l'une des revendications 1 à 4, **caractérisé en ce que** le premier et le deuxième réservoir (6, 7) à brasure sont chacun dotés de leur propre système (10, 11) de tuyères de brasage.

6. Procédé de brasage à la nappe de composants, dans lequel les composants sont déplacés sur une bande transporteuse (2) et sont amenés en contact avec une nappe de brasage formée au-dessus d'un premier réservoir (6) à brasure situé dans une position de brasage, un deuxième réservoir (7) à brasure étant prévu, et dans lequel lors d'un passage du premier réservoir (6) au deuxième réservoir (7) à brasure, le premier réservoir (6) à brasure est sorti de la position de brasage transversalement par rapport à la bande transporteuse (2) et le deuxième réservoir (7) à brasure est amené dans la position de brasage transversalement par rapport à la bande transporteuse (2).
